(19) Europäisches Patentamt
European Patent Office
Office européen des brevets

(11) EP 2 318 858 B1

(12) **FASCICULE DE BREVET EUROPEEN**

(45) Date de publication et mention
de la délivrance du brevet:
**17.07.2013 Bulletin 2013/29**

(51) Int Cl.:
*G01S 13/78* *(2006.01)*   *G01S 13/87* *(2006.01)*
*G01S 7/40* *(2006.01)*

(21) Numéro de dépôt: **09802533.1**

(86) Numéro de dépôt international:
**PCT/EP2009/060055**

(22) Date de dépôt: **03.08.2009**

(87) Numéro de publication internationale:
**WO 2010/012842 (04.02.2010 Gazette 2010/05)**

(54) **AMELIORATION DE LA LOCALISATION D'AERONEFS PAR UN RADAR PRIMAIRE PAR EXPLOITATION D'UN RADAR SECONDAIRE EN MODE S**

VERBESSERUNGEN AN DER POSITIONSSUCHE EINES FLUGZEUGS ÜBER EINEN PRIMÄRRADAR DURCH VERWENDUNG EINES SEKUNDÄRRADARS IM S-MODUS

IMPROVEMENT TO THE LOCATING OF AIRCRAFT BY A PRIMARY RADAR BY UTILIZING A SECONDARY RADAR IN S MODE

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **01.08.2008 FR 0804410**

(43) Date de publication de la demande:
**11.05.2011 Bulletin 2011/19**

(73) Titulaire: **THALES**
**92200 Neuilly-sur-Seine (FR)**

(72) Inventeur: **ROGER, Laurent**
**F-31400 Toulouse (FR)**

(74) Mandataire: **Lucas, Laurent Jacques et al**
**Marks & Clerk France**
**Conseils en Propriété Industrielle**
**Immeuble Visium**
**22, Avenue Aristide Briand**
**94117 Arcueil Cedex (FR)**

(56) Documents cités:
**GB-A- 2 213 339     US-A1- 2007 109 190**

• **BESADA PORTAS J A GARCI& ET AL: "Radar bias correction based on GPS measurements for ATC applications" IEE PROCEEDINGS: RADAR, SONAR & NAVIGATION, INSTITUTION OF ELECTRICAL ENGINEERS, GB, vol. 149, no. 3, 3 juin 2002 (2002-06-03), pages 137-144, XP006018392 ISSN: 1350-2395**
• **BAUD O ET AL: "Radar / ADS-B data fusion architecture for experimentation purpose" 2006 9TH INTERNATIONAL CONFERENCE ON INFORMATION FUSION, FUSION - 2006 9TH INTERNATIONAL CONFERENCE ON INFORMATION FUSION, FUSION 2006 INST. OF ELEC. AND ELEC. ENG. COMPUTER SOCIETY US, IEEE, PISCATAWAY, NJ, USA, 1 juillet 2006 (2006-07-01), pages 1-6, XP031042567 ISBN: 978-1-4244-0953-2**

**Description**

L'invention concerne le domaine général de la surveillance aérienne. Elle concerne plus particulièrement le domaine de la localisation radar d'aéronefs.

En matière de surveillance aérienne il est connu d'effectuer la localisation d'aéronefs en utilisant les mesures fournies par un système radar primaire. Un tel système permet en effet de localiser un aéronef sans que celui-ci ne soit activement associé à cette localisation. Le radar primaire effectue cette localisation en exploitant le signal correspondant à l'écho rétrodiffusé par l'aéronef. A partir de cet écho il est en effet théoriquement possible de déterminer avec précision, par divers moyens connus, la distance séparant l'aéronef du radar ainsi que les directions d'arrivée en site et gisement de l'écho réfléchi par l'aéronef. La détection d'échos par un radar donne lieu, de manière connue, à la création de plots qui représentent l'association de différents échos reçus et attribués à un même aéronef en fonction de critères divers, des critères de position et de date notamment. Par suite, après confirmation de vraisemblance, un plot donne lieu à la création d'une piste ou encore est intégré à une piste existante. Une piste constitue en pratique la trace laissée par un aéronef lorsqu'il traverse l'espace observé par le radar.

Cependant, la précision des mesures réalisées par le radar est fonction de données aléatoires telles que le rapport signal à bruit (S/B) de l'écho reçu. Elle est également fonction de la précision de fonctionnement de certains éléments du radar, tels que les horloges. Elle est encore fonction des divers biais liés à la réalisation du radar, tel que, par exemple, le biais d'alignement de l'axe radio électrique sur l'axe de l'antenne.

Hormis certains biais bien identifiés, systématiquement compensés à la mise en route du radar, les autres, causes d'altérations de la précision, sont difficilement quantifiables et maîtrisables alors que par ailleurs la précision requise est importante, de l'ordre 0,3° pour la mesure d'azimut par exemple.

Une solution pour accroître la précision des mesures consiste à traiter séparément les différentes causes. Ainsi, divers biais mécaniques (antenne, drive...) sont mesurés séparément en usine, tandis que d'autres paramètres, tels que les angles de pente et de devers (i.e. les deux angles d'inclinaison de l'ensemble radar par rapport à une direction de référence donnée), sont mesurés en statique lors de la mise en place du radar sur le site d'exploitation. Ils donnent généralement lieu à la détermination, par calcul, d'un biais cumulé qui est mémorisé en tant que paramètre de correction.

Parallèlement les divers éléments du radar représentant des sources potentielles d'altération de la précision des mesures, font l'objet d'une conception et d'une réalisation plus élaborée, de façon à accroître la précision obtenue et à limiter les dérives au cours du temps.

Cependant, cette solution produit des effets limités dans la pratique, dans la mesure où les biais sont eux-mêmes connus avec une certaine incertitude, et que leur cumul arithmétique ne correspond pas nécessairement au biais résultant réel qui entache la mesure. Par ailleurs la mise en oeuvre de composants de grande précision se traduit par une majoration substantielle de la complexité et du coût de réalisation du radar utilisé. En outre, une telle solution permet seulement de procéder à une compensation a priori, à partir de l'estimation d'un biais global à un instant donné, biais global dont la valeur est susceptible de varier au cours du temps en fonction de conditions extérieures.

Un but de l'invention est de proposer une solution simple permettant d'améliorer la précision de localisation d'un aéronef quelconque par un radar primaire, en déterminant l'erreur commise par le radar sur la détermination de la position de cet aéronef, erreur qui trouve son origine dans les mesures réalisées sur l'écho rétrodiffusé par ce dernier. Un autre but est de permettre une correction en temps réel de la détermination de la position de cet aéronef.

A cet effet l'invention a pour objet un procédé pour déterminer l'erreur affectant la détermination de la position d'aéronefs en vol, réalisée à partir des échos radars rétrodiffusés par ces aéronefs. Ce procédé comporte principalement:

- une première étape d'interrogation d'un aéronef de référence durant laquelle cet aéronef transmet sa position géographique et son altitude;
- l'aéronef de référence est choisi parmi ceux dont la position peut être calculée à partir de leur écho radar et qui sont équipés d'un transpondeur capable d'échanger des informations en mode S avec un radar secondaire et de transmettre leur position géographique et leur altitude par un tel canal;
- une deuxième étape de détermination de la position de l'aéronef de référence à partir des mesures réalisées sur l'écho radar rétrodiffusé par cet aéronef;
- une troisième étape de détermination de l'écart $\Delta_{R/G}$ entre la position fournie par l'aéronef de référence à un instant donné et la position de cet aéronef déterminée, pour le même instant, à partir des mesures radar réalisées pas les echos retrodiffusés par cet aeronef;
- une quatrième étape durant laquelle on calcule un écart moyen $\mu_{\Delta_{R/G}}$ défini par:

$$\mu_{\Delta_{R/G}}(n) = K \cdot \mu_{\Delta_{R/G}}(n-1) + (1-K) \cdot \Delta_{R/G}(n)$$

où:

- $\mu_{\Delta R/G}$ (n) représente l'écart moyen calculé à l'itération courante,
- $\mu_{\Delta R/G}$ (n-1) représente l'écart moyen calculé à l'itération précédente,
- $\Delta_{R/G}$ (n) représente l'écart calculé à l'itération courante,

K représentant un facteur d'intégration donné.

Selon l'invention, la première étape comporte une opération de validation de l'information de position géographique transmise par l'aéronef de référence, cette opération étant répétée tant que l'information de position transmise n'est pas validée.

Selon l'invention, lorsque l'information de position géographique est validée, les coordonnées géographiques (latitude, longitude) et l'altitude, extraites de l'information de position, sont converties en coordonnées exprimées dans le repère (distance, site, gisement) du radar.

Selon un mode de mise en oeuvre préféré, la troisième étape comporte une opération préalable de test de la vraisemblance de la position extraite de l'information de position.

L'invention a également pour objet une application du procédé selon l'invention pour corriger en temps réel le calcul de la position d'un aéronef quelconque effectué à partir des mesures réalisées sur l'écho radar rétrodiffusé par celui-ci à l'instant t considéré. Cette application comporte:

- une étape de détermination de la position de l'aéronef à partir des mesures réalisées sur l'écho radar primaire correspondant à cet aéronef;
- une étape de correction de la mesure, effectuée en prenant en compte le dernier écart de position moyen en date $\mu_{\Delta R/G}$ et en le soustrayant à la mesure; l'écart $\mu_{\Delta R/G}$ étant déterminé par mise en oeuvre du procédé selon l'invention.

L'invention a également pour objet une application du procédé selon l'invention pour réaliser une calibration périodique des mesures de position effectuées à partir d'un radar primaire. Cette application consiste à mettre en oeuvre le procédé selon l'invention et à enregistrer de manière simultanée la position géographique d'un aéronef de référence, ainsi que la position du même aéronef de référence déterminée pour le même instant par le radar primaire. Un écart de position moyen $\mu_{\Delta R/G}$ est calculé à partir des données enregistrées et utilisé comme estimation du biais de mesure présenté par le radar primaire.

Les caractéristiques et avantages de l'invention seront mieux appréciés grâce à la description qui suit, description qui expose l'invention en s'appuyant sur les figures annexées qui représentent:

La figure 1, un organigramme de principe des étapes principales du procédé selon l'invention;

La figure 2, un organigramme de principe d'une application caractéristique du procédé selon l'invention.

Le procédé selon l'invention repose sur le principe que la mesure de position réalisée par un radar primaire est nécessairement affectée d'une imprécision consécutive à des causes variées, la contribution de chacune des causes, prise séparément des autres, à l'imprécision de la mesure à un instant t n'étant pas déterminable de manière simple. Par suite au lieu de réaliser une compensation classique, basée par exemple sur l'estimation a priori d'un biais à partir de ce qui l'on connaît des imperfections du radar, ou encore sur des mesures de calibration réalisées préalablement à l'utilisation opérationnelle du radar, le procédé selon l'invention propose un mode de compensation consistant à calculer à l'aide d'une référence de position connue l'écart existant entre la position de cette référence calculée à partir des mesures effectuées par le radar et la position réelle de cette référence. Cet écart est alors utilisé pour corriger toutes les mesures de position réalisées par le radar.

Selon l'invention, la référence utilisée pour effectuer la correction des mesures effectuée par le radar primaire est une référence mobile, une référence d'opportunité, constitué par un aéronef évoluant dans l'espace couvert par le radar primaire et choisi pour son aptitude à transmettre périodiquement, sur demande, sa position géographique et son altitude. La position géographique est généralement déterminée par les équipements de bord en exploitant des moyens connus de positionnement par satellite, de type GPS ou Gallileo par exemple.

Cet aéronef, dit "aéronef de référence" est défini à un instant donné, de sorte que selon l'instant considéré l'aéronef de référence peut être différent, un nouvel aéronef de référence étant déterminé chaque fois qu'un aéronef capable de donner sa position géographique et son altitude est disponible.

Ainsi, selon l'instant de la mesure effectuée par le radar, la correction est réalisée à partir du dernier aéronef de référence défini en date.

Le procédé selon l'invention ne nécessite avantageusement pas la mise en oeuvre d'une référence fixe positionnée à un endroit précis de l'espace couvert par le radar, ni même d'une référence mobile permanente.

On peut ainsi avantageusement réaliser, de manière simple et économique, une actualisation périodique de l'estimation de l'erreur commise par un radar primaire dans la mesure de la position d'un aéronef quelconque.

Cette estimation peut ainsi être utilisée pour corriger la mesure effectuée.

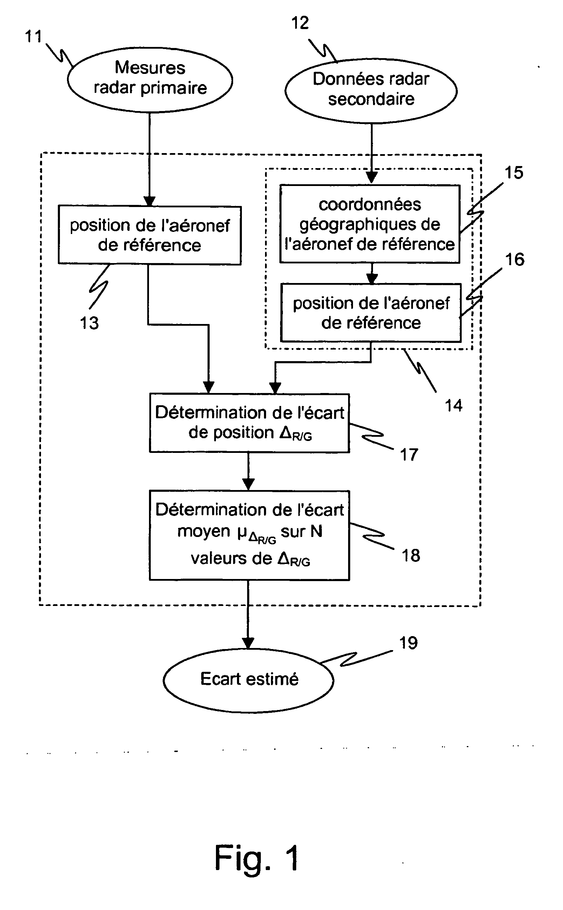

Le procédé selon l'invention peut ainsi être décrit dans son principe, comme l'illustre la figure 1, comme un procédé comportant principalement quatre étapes:

- une première étape 14 d'interrogation de l'aéronef de référence durant laquelle celui-ci transmet sa position géographique et son altitude à l'instant considéré;
- une deuxième étape 13 durant laquelle on détermine la position de l'aéronef de référence à partir des mesures réalisées, pour l'instant considéré, sur l'écho radar correspondant à cet aéronef;
- une troisième étape 17 durant laquelle on détermine l'écart $\Delta_{R/G}$ entre la position fournie par l'aéronef de référence l'instant considéré et la position de cet aéronef, déterminée, pour le même instant, à partir des mesures radar;
- une quatrième étape 18 durant laquelle on détermine un écart moyen $\mu_{\Delta_{R/G}}$ déterminé à partir de N calculs consécutifs de l'écart $\Delta_{R/G}$.

Cet écart moyen ainsi estimé sur l'aéronef de référence, caractérise l'erreur commise par le radar dans la détermination de la position d'un objet à partir des mesures réalisées sur l'écho radar correspondant. Selon l'invention il est utilisé comme biais estimé pour corriger l'ensemble des mesures de position réalisées sur tous les aéronefs détectés dans l'espace couvert par le radar primaire.

La première étape du procédé est normalement précédée d'une étape préalable durant laquelle on définit l'aéronef de référence considéré. Dans un mode de mise en oeuvre préféré du procédé selon l'invention, le choix d'un aéronef donné comme aéronef de référence et l'acquisition en différents instants de la position géographique et de l'altitude de cet aéronef (opération 15), est basée sur l'exploitation des informations fournies par un radar secondaire fonctionnant en mode S, mode de fonctionnement connu par ailleurs et non décrit ici. Par ce canal la station de mesure au sol détermine ceux des aéronefs se trouvant à l'instant considéré illuminés par le radar secondaire qui sont équipés d'un transpondeur permettant l'exploitation du mode S et parmi ceux-ci ceux capables de transmettre leur position géographique et leur altitude. Pour les aéronefs répondant à ce dernier critère ces informations de position et d'altitude sont généralement disponibles dans un registre particulier, dans le registre BDS 5 notamment. En pratique le radar secondaire réalise donc une interrogation préalable, en mode S, de tous les avions illuminés par le faisceau radar pour connaître le contenu du registre BDS17 de chacun de ces aéronefs, registre qui indique les capacités du transpondeur qui équipe l'aéronef considéré. Il traite ensuite les réponses reçues et mémorise les adresses mode S des aéronefs qui indiquent qu'ils sont en mesure de renseigner le registre BDS 5. Un de ces aéronefs est alors choisi, selon des critères définis par ailleurs, pour constituer l'aéronef de référence.

Par suite la première étape 14 du procédé comporte une opération 15 qui consiste pour le radar secondaire à demander à l'aéronef de référence la communication du contenu du registre BDS 5 et à mémoriser ce contenu.

La seconde étape 13 du procédé consiste à déterminer par toute méthode connue, la position de l'aéronef de référence, à partir des échos radars rétrodiffusés par ce dernier. Cette position est déterminée, dans le repère lié au radar primaire par la distance cible $\rho$ mesurée, l'azimut ou le gisement $\theta$, c'est-à-dire une information relative à l'écart angulaire entre une direction de référence et la direction pointée par l'antenne du radar, ainsi que le site $\varphi$, c'est-à-dire une information relative à l'écart angulaire entre le plan horizontal et la direction pointée par l'antenne du radar. La position de l'aéronef de référence est déterminée pour un instant correspondant à celui où l'aéronef a transmis sa position géographique.

La troisième étape 17 consiste à calculer pour l'aéronef de référence l'écart $\Delta_{R/G}$ entre la position de cet aéronef telle que celui-ci la transmet au radar secondaire, et la position du même aéronef telle qu'elle est mesurée par le radar primaire à partir de l'écho radar correspondant. Selon l'invention, les positions prises en compte pour le calcul de l'écart $\Delta_{R/G}$ sont les positions correspondant à un même instant t. L'identification de la position déterminée à partir des mesures du radar primaire à la position fournie par l'aéronef au radar secondaire est par ailleurs réalisée par tout moyen d'association connu.

L'écart est calculé pour chacune des cordonnées $\rho$, $\theta$ et $\varphi$. On calcule ainsi $\Delta_{R/G}(\rho) = \rho_R - \rho_G$, $\Delta_{R/G}(\theta) = \theta_R - \theta_G$ et $\Delta_{R/G}((\varphi) = \varphi_R - \varphi_G$. $\rho_R$, $\rho_G$, $\theta_R$, $\theta_G$, $\varphi_R$ et $\varphi_G$ représentent ici les coordonnées de l'aéronef de référence considéré respectivement tirées de l'information de position fournie par ce dernier ou calculées par le radar primaire.

Dans un mode de mise en oeuvre préféré, le procédé selon l'invention comporte des opérations de contrôle ou de test, réalisées durant la première étape, qui permettent de garantir la validité intrinsèque de l'information de position fournie par l'aéronef de référence. Seules les informations validées sont utilisées au cours de la troisième étape pour réaliser le calcul des écarts $\Delta_{R/G}$.

Ainsi, notamment, pour l'aéronef de référence, l'information extraite du registre BDS 5 n'est retenue que si le bit T du message contenu dans ce registre est positionné à 1, ce qui signifie que l'heure d'application des données est synchronisée avec l'heure UTC (temps universel) qui sert en particulier de référence temporelle commune au radar primaire et au radar secondaire. Dans ce cas les informations de latitude, de longitude et d'altitude, ainsi que la date relative à ces informations, sont extraites du message.

En outre, si après extraction l'une de ces quatre données s'avère être nulle, ce qui signifie généralement que la donnée n'était pas disponible à la date considérée, alors ces données sont rejetées et la position transmise n'est alors pas prise en compte. Aucune valeur d'écart de position n'est alors calculée.

Enfin, dans le cas où la position transmise par l'aéronef de référence est validée, les données de position (latitude, longitude et altitude) exprimées dans un repère géographique absolu, sont converties en coordonnées ($\rho$,$\theta$, $\varphi$) (distance, gisement et site) dans le repère du radar primaire.

Il est à noter ici que pour assurer une bonne synchronisation des mesures effectuées par le radar primaire et de la position fournie par le radar secondaire, au moment du calcul de l'écart, on peut être amené à actualiser la position fournie par l'aéronef de référence pour déterminer la position exacte de celui-ci à l'instant des mesures effectuées par le radar primaire. L'actualisation peut être par exemple réalisée par extrapolation à partir de la position transmise.

Ces opérations de contrôle peuvent être complétées par une opération de contrôle complémentaire, qui consiste à appliquer aux données, au début de la troisième étape 17, un filtrage relatif à la vraisemblance des mesures de positions obtenues soit à partir de l'écho radar soit à partir de l'information de position tirée du message BDS 5. Le but de ce filtrage est bien entendu d'éliminer les données aberrantes.

En pratique, cette dernière opération de filtrage sur la vraisemblance des données est effectuée pour chaque aéronef de référence, avant le calcul de l'écart de position $\Delta_{R/G}$. pour ce faire, la position ($\rho$,$\theta$,$\varphi$) G tirée de l'information de position géographique est comparée à la position ($\rho$,$\theta$,$\varphi$) R fournie par le radar primaire. Les grandeurs |$\rho$G - $\rho$R| et |$\theta$G - $\theta$R| sont ensuite comparées à des seuils respectifs S$\theta$ et Sp.

Par suite, dans le cas où l'on a:

$$|\rho G - \rho R| < S\rho \text{ et } |\theta G - \theta R| < S\theta$$

Les calculs des écarts $\Delta_{R/G}$ sur $\rho$ et $\theta$ sont effectués. De manière analogue, la qualité de $\varphi$R étant déterminée en fonction du site visé et du rapport signal sur bruit, on compare la grandeur |$\varphi$G - $\varphi$R| à un seuil S$\varphi$. Par suite si |$\varphi$G - $\varphi$R| < S$\varphi$ alors le calcul de l'écart sur $\varphi$ est effectué. En pratique, les valeurs des seuils S$\rho$, S$\theta$ et S$\varphi$ sont fixées de manière arbitraire à partir de mesures réalisées par ailleurs. On peut ainsi peut prendre des valeurs typiques telle que S$\rho$ < 0.20Nm, S$\theta$ < 3.5°, S$\varphi$ < 3.5°.

Il est à noter qu'un calcul plus précis pourra être obtenu en ne prenant en compte, pour l'estimation de l'écart $\Delta_{R/G}$, c'est-à-dire pour le choix d'un aéronef de référence, que les plots radars tirés d'échos relatifs à un aéronef suivant une trajectoire rectiligne. Pour ce faire, une méthode est de considérer les pistes relatives aux aéronefs détectés, en coordonnées (x, y, z), et effectuer sur une fenêtre glissante un ajustement linéaire de chaque piste par la méthode des moindres carrés. Le coefficient de corrélation linéaire entre les plots constituant la fenêtre est alors calculé. Par suite, si la valeur de celui-ci est en dessous d'une valeur fixée par ailleurs, les plots correspondant à la fenêtre sont rejetés et l'aéronef correspondant n'est pas considéré pour le choix d'un aéronef de référence. La taille de la fenêtre d'analyse est par exemple fixée, de manière typique à 10 plots.

Afin de s'affranchir d'éventuelles fluctuations des mesures radar effectuées sur l'aéronef de référence, fluctuations qui peuvent avoir pour effet de faire varier de manière significative la valeur de l'écart de position estimé d'une estimation à l'autre de l'écart de position $\Delta_{R/G}$, le procédé selon l'invention comporte une quatrième étape 18 qui effectue le calcul d'un écart de mesure de position moyen $\mu_{\Delta R/G}$, écart moyen qui est utilisé pour effectuer la correction des mesures de position effectuées par le radar primaire.

Cette étape est par exemple réalisée en effectuant le calcul de la moyenne sur N mesures consécutives des écarts $\Delta_{R/G}$ calculés.

Selon l'invention, cet écart moyen est par exemple estimé en calculant par intégration temporelle la grandeur $\mu_{\Delta R/G}$ définie par la relation suivante:

$$\mu_{\Delta_{R/G}}(n) = K \cdot \mu_{\Delta_{R/G}}(n-1) + (1-K) \cdot \Delta_{R/G}(n)$$

où :

$\mu\Delta_{R/G}$ (n) Représente la valeur de $\mu_{\Delta R/G}$ calculée pour l'instant de mesure courant n,

$\mu_{\Delta R/G}$ (n-1) représente la valeur de $\mu_{\Delta R/G}$ calculée pour l'instant de mesure précédent,

$\Delta_{R/G}$(n) représente l'écart calculé pour l'instant de mesure courant n, l'aéronef de référence utilisé pour le calcul le $\Delta_{R/G}$(n) est le dernier aéronef de référence défini en date, à partir du radar secondaire.

K représente ici un facteur d'intégration défini en fonction des ressources de calcul du système et du nombre de résultats de calcul de $\Delta_{R/G}$(n) nécessaires a priori pour constater une convergence de $\mu_{\Delta R/G}$ .

Selon l'invention, le calcul de $\mu_{\Delta R/G}$ est en outre initialisé en posant à la première itération $\mu_{\Delta R/G}$ (1) = $\Delta_{R/G}$(1).

La grandeur $\mu_{\Delta R/G}$ constitue une estimation fine de l'écart moyen entre position géographique donnée par l'aéronef de référence et la position déterminée par le radar primaire chargé de déterminer la position des aéronefs évoluant dans l'espace dont il a la charge.

Le procédé selon l'invention permet ainsi d'estimer en temps réel l'écart moyen existant entre la position déterminée à partir des mesures réalisées par un radar primaire sur l'écho rétrodiffusé par un aéronef de référence, et la position déterminée à partir des coordonnées géographiques et d'altitude fournie par cet aéronef à un radar secondaire. Cet écart, représentatif de l'erreur commise par le radar primaire du fait des imperfections dont il est affecté, peut être avantageusement utilisé pour corriger la mesure de position réalisée sur n'importe quel aéronef présent dans l'espace couvert par le radar primaire.

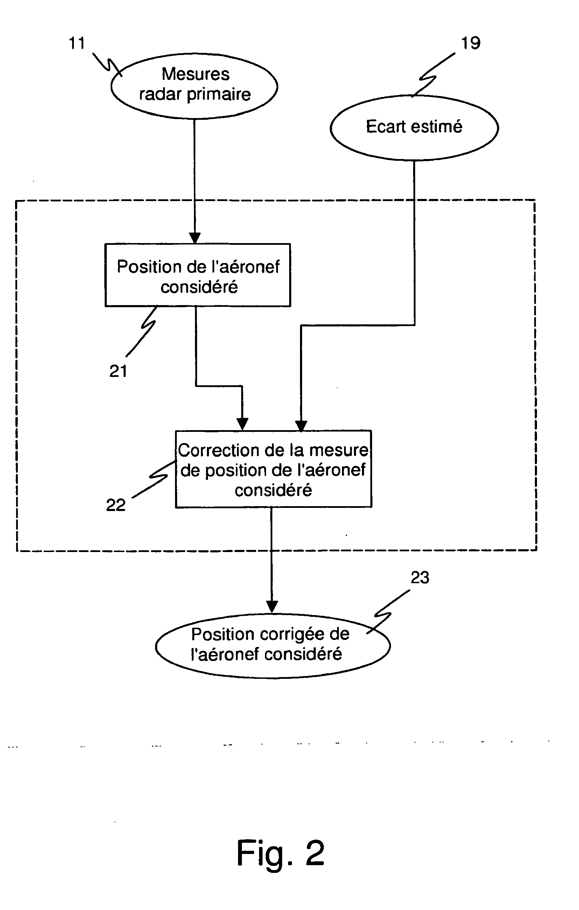

La figure 2 illustre la façon dont le procédé selon l'invention peut être appliqué dans le cadre particulier d'un procédé de mesure de position, de localisation, pouvant être mis en oeuvre par une station de mesure comportant un radar primaire et un radar secondaire. Le procédé illustré ici est présenté à titre d'exemple non limitatif. Il a pour objet de corriger en temps réel l'erreur effectuée par le radar primaire sur la détermination de la position de tout aéronef détecté.

Le procédé de localisation, illustré par la figure 2, s'applique de manière itérative à chacun des aéronefs suivis par le radar primaire au rythme du balayage du faisceau du radar. A cet effet il associe, le résultat du calcul 21 de la position d'un aéronef quelconque, effectué au moyen des mesures 11 fournies par le radar primaire, au résultat du calcul d'écart 19 effectué sur l'aéronef défini comme aéronef de référence à l'instant considéré. Il effectue ensuite un calcul de correction 22 à l'issu duquel on obtient une valeur corrigée 23 de la position de l'aéronef suivi.

Le calcul de correction d'erreur 22 consiste, à retrancher, en valeur algébrique, l'écart moyen $\mu_{\Delta R/G}$ estimé, à la mesure de position réalisée par le radar primaire, l'écart moyen retranché correspondant au dernier écart moyen calculé en date.

Ce procédé localisation, mets ainsi en ceuvre deux traitements itératifs des données obtenues au moyen des radars primaires et secondaires, dont les périodicités sont différentes:

- un premier traitement, illustré par la figure 2, qui est exécuté pour chaque aéronef détecté au rythme du balayage de l'antenne du radar primaire;
- un second traitement illustré par la figure 1, qui est exécuté au rythme de la détection par le radar secondaire d'un aéronef susceptible de constituer un aéronef de référence. Ce second traitement est implémenté par mise en oeuvre du procédé de calcul de l'erreur de position selon l'invention tel qu'il a été décrit précédemment.

A chaque exécution de ce second traitement, on dispose d'une estimation réactualisée de l'écart moyen de position, valeur qui est utilisée pour corriger les mesures effectuées par le radar primaire.

Ainsi le procédé selon l'invention permet avantageusement d'effectuer une calibration périodique, en fonctionnement opérationnel ("on line"), du radar primaire sans nécessiter le recours à une balise de test ou a un aéronef de calibration. Il permet cependant également de réaliser une calibration du radar primaire hors fonctionnement opérationnel ("off line"), même pour une station de mesure avec un radar primaire et un radar secondaire, ne comportant pas les moyens de traitement nécessaires pour le mettre en oeuvre. Pour ce faire, il suffit de disposer de moyens d'enregistrement externes et de réaliser simultanément une acquisition du registre BDS5 en mode S par le radar secondaire et un enregistrement de la position GPS capturée, ainsi qu'un enregistrement de la position donnée par le radar primaire. Les opérations de conversion (étape 14) et de comparaison sont réalisées en un second temps afin de déterminer (étape 17 et 18) l'écart de mesure et donc la précision de mesure radar. Cette procédure "off line" présente l'avantage par rapport à une calibration "off-line" classique de ne pas nécessiter la mise en oeuvre d'un aéronef de calibration.

## Revendications

1. Procédé pour déterminer l'erreur affectant la détermination de la position d'aéronefs en vol, réalisée à partir des échos radars rétrodiffusés par ces aéronefs, **caractérisé en ce qu'**il comporte principalement:

   - une première étape (14) d'interrogation d'un aéronef de référence durant laquelle cet aéronef transmet sa position géographique et son altitude; l'aéronef de référence étant choisi parmi ceux dont la position peut être calculée à partir de leur écho radar et qui sont équipés d'un transpondeur capable d'échanger des informations en mode S avec un radar secondaire et de transmettre leur position géographique et leur altitude par un tel canal;

- une deuxième étape (13) de détermination de la position de l'aéronef de référence à partir des mesures réalisées sur l'écho radar rétrodiffusé par cet aéronef;

- une troisième étape (17) de détermination de l'écart $\Delta_{R/G}$ entre la position fournie par l'aéronef de référence à un instant donné et la position de cet aéronef déterminée, pour le même instant, à partir des mesures radar réalisées sur les échos rétrodiffusés par cet aéronef;

- une quatrième étape (18) durant laquelle on calcule un écart moyen $\mu\Delta_{R/G}$ défini par:

$$\mu_{\Delta_{R/G}}(n) = K \cdot \mu_{\Delta_{R/G}}(n-1) + (1-K) \cdot \Delta_{R/G}(n)$$

où
- $\mu_{\Delta_{R/G}}$ (n) représente l'écart moyen calculé à l'itération courante,
- $\mu_{\Delta_{R/G}}$ (n-1) représente l'écart moyen calculé à l'itération précédente,
- $\Delta_{R/G}$(n) représente l'écart calculé à l'itération courante,

K représentant un facteur d'intégration donné.

2. Procédé selon la revendication 1, **caractérisé en ce que** la première étape comporte une opération de validation de l'information de position géographique transmise par l'aéronef de référence, cette opération étant répétée tant que l'information de position transmise n'est pas validée.

3. Procédé selon la revendication 2, **caractérisé en ce que**, lorsque information de position géographique est validée, les coordonnées géographiques (latitude, longitude) et l'altitude, extraites de l'information de position, sont converties (16) en coordonnées exprimées dans le repère (distance, site, gisement) du radar.

4. Procédé selon l'une quelconque des revendications 1 à 3, **caractérisé en ce que** la troisième étape (17) comporte une opération préalable de test de la vraisemblance de la position extraite de l'information de position

5. Utilisation du procédé selon l'une quelconque des revendications précédentes pour corriger en temps réel le calcul de la position d'un aéronef quelconque effectué à partir des mesures réalisées sur l'écho radar rétrodfffusé par celui-ci à l'instant t considéré, **caractérisé en ce qu'**il comporte:

- une étape (21) de détermination de ta position de l'aéronef à partir des mesures (11) réalisées sur l'écho radar primaire correspondant à cet aéronef;

- une étape (22) de correction de la mesure, effectuée en prenant en compte le dernier écart de position moyen en date $\mu_{\Delta R/G}$ (19) et en le soustrayant à la mesure

6. Procédé pour réaliser une calibration périodique des mesures de position (21) effectuées à partir d'un radar pnmaire, **caractérisée en ce qu'**il consiste à mettre en oeuvre le procédé selon l'une des revendications. 1 à 4 et à enregistrer de manière simultanée la position géographique d'un aéronef de référence, ainsi que la position du même aéronef de référence déterminée pour le même instant par le radar primaire; un écart de position moyen $\mu_{\Delta R/G}$ étant calculé à partir des données enregistrées et utilisé comme estimation du biais de mesure presenté par le radar primaire.

**Patentansprüche**

1. Verfahren zum Ermitteln eines Fehlers, der die Ermittlung der Position von im Flug befindlichen Flugzeugen beeinträchtigt, die auf der Basis von von dem Flugzeug zurückgestreuten Radarechos erfolgt, **dadurch gekennzeichnet, dass** es hauptsächlich Folgendes beinhaltet:

- einen ersten Schritt (14) des Abfragens eines Referenzflugzeugs, bei dem das Flugzeug seine geografische Position und seine Höhe sendet, wobei das Referenzflugzeug aus denen ausgewählt wird, deren Position auf der Basis ihres Radarechos berechnet werden kann, und die mit einem Transponder ausgestattet sind, der zum Austauschen von Informationen im S-Modus mit einem Sekundärradar und zum Übertragen ihrer geografischen Position und ihrer Höhe über einen solchen Kanal ausgelegt ist;

- einen zweiten Schritt (13) des Ermittelns der Position des Referenzflugzeugs auf der Basis von Messungen, die an dem von diesem Flugzeug zurückgestreuten Radarecho durchgeführt werden;

- einen dritten Schritt (17) des Ermittelns der Abweichung zwischen der vom Referenzflugzeug gelieferten Position zu einem gegebenen Zeitpunkt und der Position des Flugzeugs, die für denselben Zeitpunkt auf der Basis der an den von dem Flugzeug zurückgestreuten Echos durchgeführten Radarmessungen ermittelt wird;

- einen vierten Schritt (18), bei dem eine mittlere Abweichung $\mu_{\Delta R/G}$ berechnet wird, die definiert wird durch:

$$\mu_{\Delta_{R/G}}(n) = K \cdot \mu_{\Delta_{R/G}}(n-1) + (1-K) \cdot \Delta_{R/G}(n)$$

wobei

- $\mu_{\Delta R/G}$ (n) die bei der aktuellen Iteration berechnete mittlere Abweichung repräsentiert;
- $\mu_{\Delta R/G}$ (n-1) die bei der vorherigen Iteration berechnete mittlere Abweichung repräsentiert;
- $\Delta_{R/G}$(n) die bei der aktuellen Iteration berechnete Abweichung repräsentiert, wobei K einen gegebenen Integrationsfaktor repräsentiert.

2. Verfahren nach Anspruch 1, **dadurch gekennzeichnet, dass** der erste Schritt einen Vorgang des Validierens von geografischen Positionsinformationen beinhaltet, die von dem Referenzflugzeug übertragen werden, wobei der Vorgang so lange wiederholt wird, wie die übermittelte Positionsinformation nicht validiert ist.

3. Verfahren nach Anspruch 2, **dadurch gekennzeichnet, dass**, wenn die geografische Positionsinformation validiert ist, die aus der Positionsinformation extrahierten geografischen Koordinaten (Breite, Länge) und die Höhenkoordinaten in Koordinaten umgewandelt (16) werden, die in der Referenz (Entfernung, Ort, Peilwinkel) des Radars ausgedrückt sind.

4. Verfahren nach einem der Ansprüche 1 bis 3, **dadurch gekennzeichnet, dass** der dritte Schritt (17) einen Vorabtest der Wahrscheinlichkeit der aus der Positionsinformation extrahierten Position beinhaltet.

5. Anwendung des Verfahrens nach einem der vorherigen Ansprüche für eine Echtzeitkorrektur der Berechnung der Position eines beliebigen Flugzeugs, die auf der Basis von Messungen erfolgt, die an dem von dem Flugzeug zurückgestreuten Radarecho zum betrachteten Zeitpunkt t durchgeführt werden, **dadurch gekennzeichnet, dass** es Folgendes beinhaltet:

- einen Schritt (21) des Ermittelns der Position des Flugzeugs auf der Basis der Messungen (11), die an dem primären Radarecho durchgeführt werden, das dem Flugzeug entspricht;
- einen Schritt (22) des Korrigierens des Messwerts, ausgeführt unter Berücksichtigung der letzten mittleren Positionsabweichung zum Zeitpunkt $\mu_{\Delta R/G}$ (19) und durch Subtrahieren des Wertes von dem Messwert.

6. Verfahren zum Durchführen einer periodischen Kalibrierung der Positionsmessungen (21), die von einem Primärradar durchgeführt werden, **dadurch gekennzeichnet, dass** es darin besteht, das Verfahren nach einem der Ansprüche 1 bis 4 auszuführen und gleichzeitig die geografische Position eines Referenzflugzeugs sowie die für denselben Zeitpunkt vom Primärradar ermittelte Position desselben Referenzflugzeugs aufzuzeichnen, wobei eine mittlere Positionsabweichung $\mu_{\Delta R/G}$ auf der Basis von aufgezeichneten Daten berechnet und als Schätzung für die vom Primärradar präsentierte Messverzerrung benutzt wird.

**Claims**

1. A method for determining the error that affects the determination of the position of aircraft in flight, realised on the basis of radar echoes backscattered by said aircraft, **characterised in that** it mainly comprises:

- a first step (14) of interrogating a reference aircraft during which said aircraft transmits its geographical position and its altitude, said reference aircraft being selected from those having a position that can be calculated on the basis of their radar echo and which are fitted with a transponder that is designed to exchange information with a secondary radar in S mode and to transmit their geographical position and their altitude via such a channel;
- a second step (13) of determining the position of said reference aircraft on the basis of measurements carried out on the radar echo backscattered by said aircraft;

- a third step (17) of determining the deviation $\Delta_{R/G}$ between the position supplied by said reference aircraft at a given instant and the position of said aircraft that is determined, for the same instant, on the basis of the radar measurements carried out on the echoes backscattered by said aircraft;

- a fourth step (18) during which a mean deviation $\mu_{\Delta R/G}$ is calculated that is defined by:

$$\mu_{\Delta_{R/G}}(n) = K \cdot \mu_{\Delta_{R/G}}(n-1) + (1-K) \cdot \Delta_{R/G}(n)$$

where

- $\mu_{\Delta_{R/G}}(n)$ represents the mean deviation that is calculated at the current iteration;
- $\mu_{\Delta_{R/G}}(n-1)$ represents the mean deviation that is calculated at the preceding iteration;
- $\Delta_{R/G}(n)$ represents the deviation that is calculated at the current iteration, with K representing a given integration factor.

2. The method according to claim 1, **characterised in that** the first step comprises an operation for validating geographical position information that is transmitted by said reference aircraft, said operation being repeated as long as the transmitted position information has not been validated.

3. The method according to claim 2, **characterised in that**, when the geographical position information has been validated, then the geographical (latitude, longitude) and the altitude coordinates extracted from the position information are converted (16) into coordinates that are expressed in the reference (distance, site, bearing) of the radar.

4. The method according to any one of claims 1 to 3, **characterised in that** the third step (17) comprises a prior operation for testing the likelihood of the position that is extracted from the position information.

5. The use of the method according to any one of the preceding claims for real-time correction of the calculation of the position of any aircraft carried out on the basis of measurements carried out on the radar echo backscattered by said aircraft at the considered instant t, **characterised in that** it comprises:

- a step (21) of determining the position of said aircraft on the basis of measurements (11) carried out on the primary radar echo that corresponds to said aircraft;
- a step (22) of correcting the measurement, which step is carried out by taking into account the last mean position deviation at the time $\mu_{\Delta R/G}$ (19) and by subtracting it from the measurement.

6. A method for carrying out a periodic calibration of the position measurements (21) carried out from a primary radar, **characterised in that** it consists in implementing the method according to any one of claims 1 to 4 and in simultaneously recording the geographical position of a reference aircraft, as well as the position of the same reference aircraft that is determined for the same instant by the primary radar, with a mean position deviation $\mu_{\Delta R/G}$ being calculated on the basis of recorded data and being used as an estimate of the measurement bias presented by the primary radar.

Fig. 1

11 Mesures radar primaire

19 Ecart estimé

21 Position de l'aéronef considéré

22 Correction de la mesure de position de l'aéronef considéré

23 Position corrigée de l'aéronef considéré

# Fig. 2